# EUROPÄISCHE PATENTANMELDUNG

(11) **EP 0 681 006 A1**
(43) Veröffentlichungstag der Anmeldung: **08.11.1995**
(21) Anmeldenummer: 95106232.2
(22) Anmeldetag: 26.04.1995
(51) Int. Cl.: C09B 62/04, C07D 251/44

(54) **Verfahren zur kontinuierlichen Umsetzung von aminogruppenhaltigen organischen Farbstoffen mit Trifluortriazin**

(30) Priorität: 06.05.1994 DE 4416015
(71) Anmelder: HOECHST AKTIENGESELLSCHAFT, D-65929 Frankfurt am Main (DE)
(72) Erfinder: Dannheim, Jörg, Dr., D-60489 Frankfurt am Main (DE); Angenendt, Heinrich, Dr., D-65510 Idstein (DE)

(57) **Zusammenfassung**

Verfahren zur kontinuierlichen Umsetzung von aminogruppenhaltigen organischen Farbstoffen der allgemeinen Formel (II) 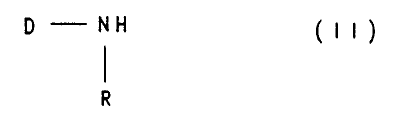
worin D ein sulfogruppenhaltiger Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbamid-Farbstoff ist und R Wasserstoff oder gegebenenfalls substituiertes C₁-C₄-Alkyl bedeutet, mit 2,4,6-Trifluor-s-triazin, dadurch gekennzeichnet, daß man eine gekühlte neutrale, wäßrige Lösung oder Suspension des Farbstoffs der Formel (II) mit einer 1,0 bis 2,0fachen molaren Menge Puffer versetzt und diese dann kontinuierlich und gleichzeitig mit 2,4,6-Trifluor-s-triazin in einen Reaktionsraum leitet, in welchem durch einen Mischer eine intensive Durchmischung der beiden Komponenten realisiert wird, wobei die Verweilzeit in diesem Reaktorraum zwischen 1 und 30 Sekunden beträgt.

## Beschreibung

Die Erfindung betrifft ein Verfahren zur kontinuierlichen Umsetzung von aminogruppenhaltigen organischen Farbstoffen mit Trifluortriazin.

Verfahren zur Herstellung von Reaktivfarbstoffen der allgemeinen Formel (I) 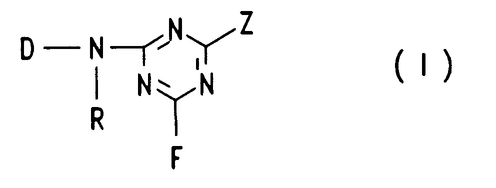
worin D eine Farbstoffkomponente, Z eine gegebenenfalls substituierte Aminokomponente und R Wasserstoff oder einen Alkylrest darstellt, sind in der Literatur beschrieben.

Diese Verfahren gehen von Trifluortriazin aus, das meist zuerst mit der Aminokomponente H-Z und anschließend mit dem Farbstoff D-NH-R umgesetzt wird: 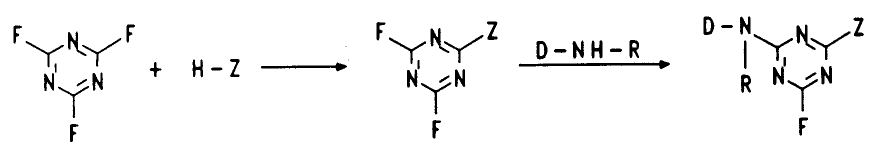
Bei dieser Reaktionsführung sind aufwendige apparative Maßnahmen erforderlich, um Dikondensationsprodukte zu vermeiden (DE 40 16 159, EP 172 790).

Verfahren mit umgekehrter Reaktionsführung, d.h. zuerst Umsetzung des Trifluortriazins mit der Farbstoffkomponente sind ebenfalls bekannt (DE 27 46 109). 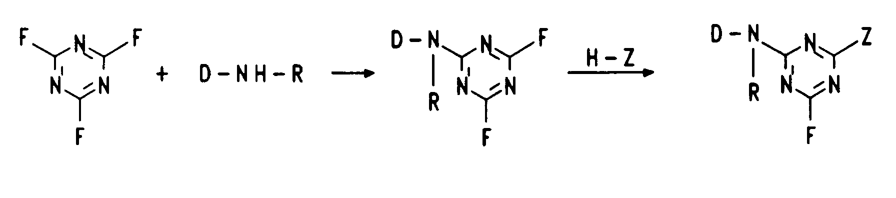
Hierbei tritt das Problem auf, daß bei analoger Durchführung zur Umsetzung mit "einfachen" Aminen H-Z keine vollständige Umsetzung des Farbstoffs D-NH-R auftritt, die erhaltene Reaktionslösung neben acyliertem Farbstoff also noch unumgesetztes Edukt enthält (Beispiele 3 und 4 der DE 2 746 109).

Dies schränkt die Umsetzungsmöglichkeiten zu den Farbstoffen der Formel (I) stark ein, bzw. liefert bei direkter Umsetzung der erhaltenen Lösungen nur stark verunreinigte Produkte.

Es bestand daher ein großer Bedarf nach einem einfach durchzuführenden Verfahren, das die Monoacylierungsprodukte von Farbstoffen mit Trifluortriazin in hoher Ausbeute und Reinheit zugänglich macht.

Diese Aufgabe wird gelöst durch ein Verfahren zur kontinuierlichen Umsetzung von aminogruppenhaltigen organischen Farbstoffen der allgemeinen Formel (II) 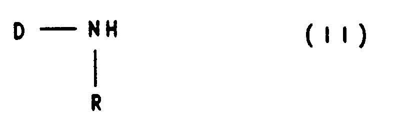
worin D ein sulfogruppenhaltiger Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbamid-Farbstoff ist und R Wasserstoff oder gegebenenfalls substituiertes C₁-C₄-Alkyl bedeutet, mit 2,4,6-Trifluor-s-triazin, zu Acylierungsprodukten der Formel (III) 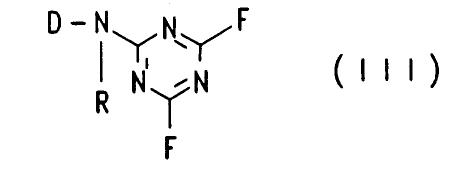
das dadurch gekennzeichnet ist, daß man eine gekühlte neutrale, wäßrige Lösung oder Suspension des Farbstoffs der Formel (II) mit einer 1,0 bis 2,0fachen molaren Menge Puffer versetzt und diese dann kontinuierlich und gleichzeitig mit 2,4,6-Trifluor-s-triazin in einen Reaktionsraum leitet, in welchem durch einen Mischer eine intensive Durchmischung der beiden Komponenten realisiert wird, wobei die Verweilzeit in diesem Reaktorraum zwischen 1 und 30 Sekunden beträgt.

Sehr gut geeignet ist das Verfahren für Verbindungen der Formel (II), worin D ein Azo-, Polyazo-, Formazan- oder Dioxazin-Farbstoff ist und R für Methyl, Ethyl, Propyl, Isopropyl, Butyl, Isobutyl, sek.-Butyl, tert.-Butyl, Carboxymethyl, β-Carboxethyl, Methoxycarbonylmethyl, Ethoxycxarbonylmethyl, β-Methoxyethyl, β-Ethoxyethyl, β-Methoxypropyl, β-Chlorethyl,γ-Brompropyl, β-Hydroxyethyl, β-Hydroxybutyl, β-Cyanethyl, Sulfomethyl, β-Sulfoethyl, Aminosulfonylmethyl und β-Sulfatoethyl, insbesondere Wasserstoff, Methyl oder Ethyl, bevorzugt Wasserstoff, steht.

Sehr wertvoll ist das Verfahren auch für die Umsetzung von 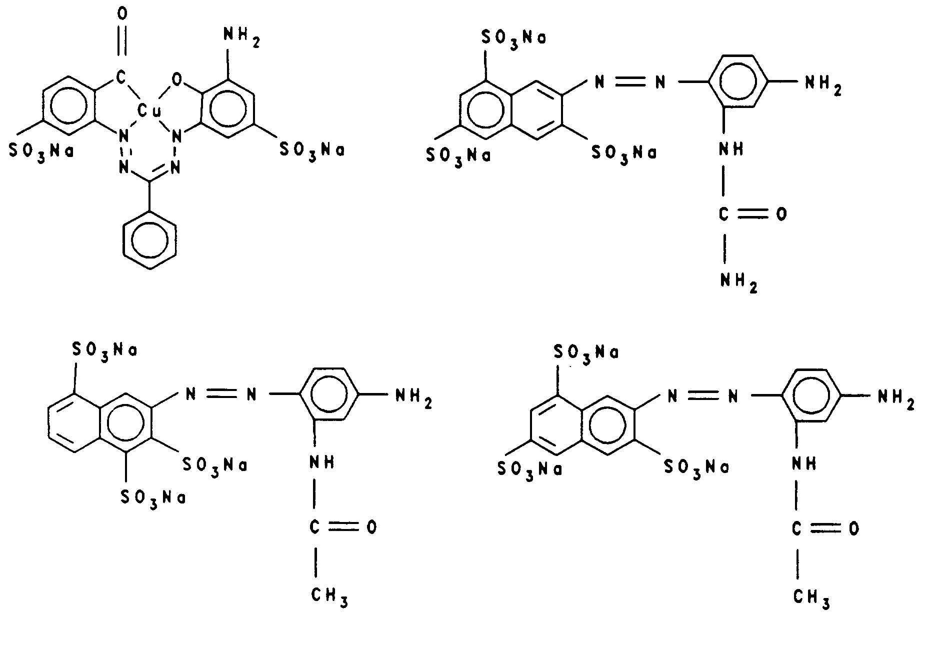
Eine Ausführungsform dieser Erfindung besteht darin, daß man den Aminofarbstoff (II) als neutrale, auf 0 - 5°C gekühlte wäßrige Lösung oder Suspension mit einer geeigneten Puffersubstanz versetzt und kontinuierlich und gleichzeitig mit den notwendigen Mengen Cyanurfluorid in den Reaktionsraum leitet. Ein Abfang des gebildeten Fluorwasserstoffs, wie in beschriebenen halbkontinuierlichen Verfahren, ist nicht notwendig. Geeignete Puffersubstanzen sind z.B. Dinatriumhydrogenphosphat, Dilithiumhydrogenphosphat oder Dikaliumhydrogenphosphat. Man kann auch die entsprechende Dihydrogenphosphate einsetzen und daraus durch Zugabe von stöchiometrischen Mengen Alkali die Hydrogenphosphate herstellen. Insbesondere ist Dinatriumhydrogenphosphat als Puffer bevorzugt. Die Aminofarbstoffe (2) können entweder direkt aus der Syntheselösung oder in weitgehend salzfreier Form (z.B. durch Entsalzung nach einen Membrantrennverfahren) eingesetzt werden. Bevorzugt sind Aminofarbstofflösungen oder Suspensionen bei deren Herstellung man zur notwendigen pH-Steuerung Phosphorsäure oder Phosphate verwendet hat, sowie entsalzte Aminofarbstoffe.

Die Erfindung betrifft ferner die Verwendung der nach dem beschriebenen Verfahren hergestellten Verbindungen zur weiteren Umsetzung mit Verbindungen der Formel (III)

H-Z (III)

worin Z eine gegebenenfalls substituierte Aminogruppe bedeutet, zu Reaktivfarbstoffen der allgemeinen Formel (I).

Als unsubstituierte oder substituierte Aminogruppen Z für diese Reaktion kommen in Betracht: -NH₂, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die obengenannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenethyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von 6-gliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Reste sowie die N-heterocyclischen Ringe können weiter substituiert sein, z.B. durch: Halogen, wie Fluor, Chlor und Brom, Nitro, Cyan, Trifluormethyl, Sulfamoyl, Carbamoyl, C₁₋₁₄-Alkyl, C₁₋₁₄-Alkoxy, Acylaminogruppen, wie Acetylamino oder Benzoylamino, Ureido, Hydroxy, Carboxy, Sulfomethyl, Sulfato oder Sulfo. Als Beispiele für derartige Aminogruppen seien genannt: -NH₂, Methylamino, Ethylamino, Propylamino, Isopropylamino, Butylamino, Hexylamino, β-Methoxyethylamino, γ-Methoxypropylamino, β-Ethoxyethylamino, N,N-Dimethylamino, N,N-Diethylamino, β-Chlorethylamino, β-Cyanethylamino, γ-Cyanpropylamino, β-Carboxethylamino, Sulfomethylamino, β-Sulfoethylamino, β-Hydroxyethylamino, N,N-Di-β-Hydrocxyethylamino, γ-Hydroxypropylamino, Benzylamino, Phenethylamino, Cyclohexylamino, Phenylamino, Toluidino, Xylidino, Chloranilino, Anisidino, Phenetidino, N-Methyl-N-phenylamino, N-Ethyl-N-phenylamino, N-β-hyrdroxyethjyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 3- oder 4-Sulfatoethylsulfonyl-phenylamino, 3- oder 4-Vinylsulfonylamino, 4-sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino und Piperazino.

Besonders wichtig sind Umsetzungen, worin Z bedeutet: β-Sulfatoethylsulfonylethylamino, β-Sulfatoethylsulfonylpropylamino, β-Sulfatoethylsulfonylbutylamino, 2-(β-Sulfatoethylsulfonylsulfonyl)-ethylethylamino, 2-(β-Chlorethylsulfonyl)-ethylethylamino, (β-Chlor-Ethylsulfonyl)-butylamino, (β-Chlor-Ethylsulfonyl)-propylamino, (β-Chlor-Ethylsulfonyl)-ethylamino.

Das Verfahren liefert Reaktivfarbstoffe der Formel (I) in hoher Ausbeute und großer Reinheit. Die Reaktivfarbstoffe der Formel (I) eignen sich besonders zum Färben von Baumwolle aus wäßrigem Färbebad nach bekannten Verfahren.

Die folgenden Beispiele sollen das Verfahren erläutern, ohne es darauf zu beschränken.

### Beispiel 1

In einer neutralen auf 0°C gekühlten Lösung von 60 g des folgenden Aminofarbstoffes: 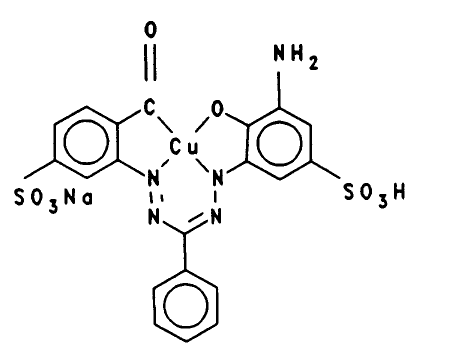
werden 17 g Na₂HPO₄ gegeben und diese Lösung gleichzeitig und kontinuierlich mit 14,2 g Cyanurfluorid umgesetzt. Die erhaltene Lösung wird noch 15 Minuten bei 0 - 3°C gerührt, danach werden 21 g (β-Chlor-ethylsulfonyl)-ethylamin fest zugegeben und mit Sodalösung ein Ph-Wert von 6 - 8 gehalten und die Lösung auf 5 - 10°C erwärmt. Nach 3 Stunden wird der pH-Wert zurückgestellt und der Farbstoff folgender Konstitution: 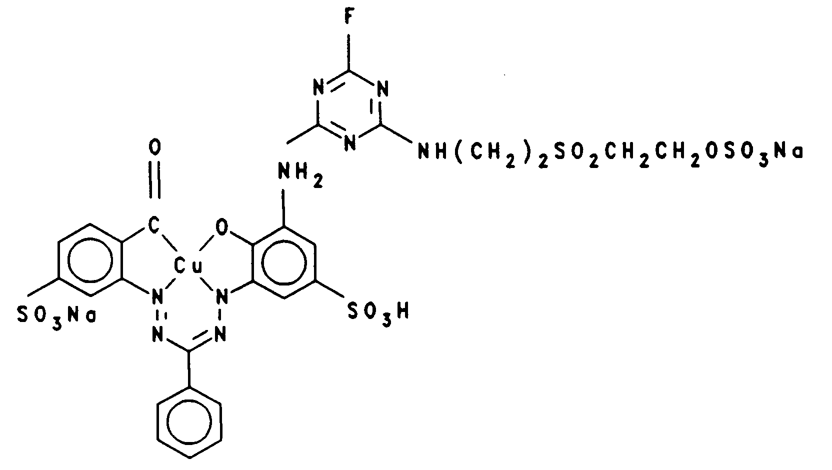
durch Aussalzen isoliert oder die Farbstofflösung sprühgetrocknet

### Beispiel 2

Zu einer neutralen, auf 0°C gekühlten Lösung von 55 g des folgenden Aminofarbstoffs: 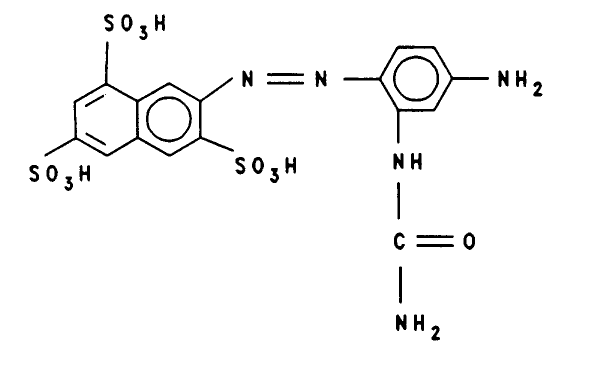
werden 17 g Na₂HPO₄ gegeben und diese Lösung gleichzeitig und kontinuierlich mit 14,2 g Cyanurfluorid umgesetzt. Die erhaltene Lösung wird noch 15 Minuten bei 0 - 3°C gerührt, danach werden 21,0 g (β-Chlorethylsulfonyl)-ethylamin fest zugegeben, und mit Sodalösung ein pH von 6 - 8 gehalten, und die Lösung auf 5 - 10°C erwärmt. Nach 3 Stunden wird der pH zurückgestellt und der Farbstoff folgender Konstitution 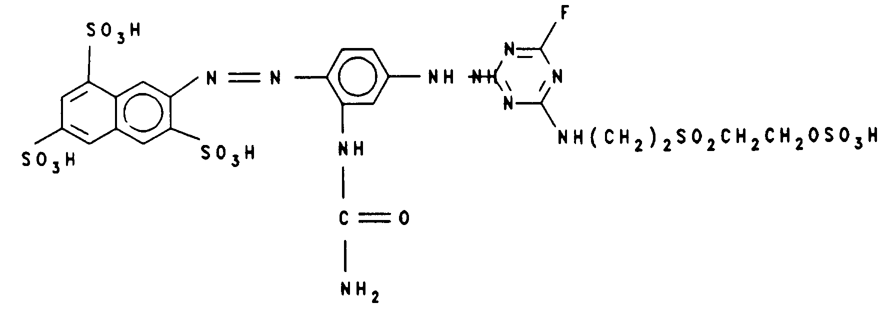
durch Aussalzen isoliert, oder bevorzugt, gegebenenfalls nach Entsalzung, sprühgetrocknet.

## Patentansprüche

1. Verfahren zur kontinuierlichen Umsetzung von aminogruppenhaltigen organischen Farbstoffen der allgemeinen Formel (II) 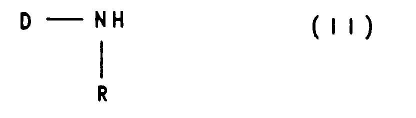 worin D ein sulfogruppenhaltiger Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbamid-Farbstoff ist und R Wasserstoff oder gegebenenfalls substituiertes C₁-C₄-Alkyl bedeutet, mit 2,4,6-Trifluor-s-triazin, dadurch gekennzeichnet, daß man eine gekühlte neutrale, wäßrige Lösung oder Suspension des Farbstoffs der Formel (II) mit einer 1,0 bis 2,0fachen molaren Menge Puffer versetzt und diese dann kontinuierlich und gleichzeitig mit 2,4,6-Trifluor-s-triazin in einen Reaktionsraum leitet, in welchem durch einen Mischer eine intensive Durchmischung der beiden Komponenten realisiert wird, wobei die Verweilzeit in diesem Reaktorraum zwischen 1 und 30 Sekunden beträgt.

2. Verfahren nach Anspruch 1, dadurch gekennzeichnet, daß D ein Azo-, Polyazo-, Formazan- oder Dioxazin-Farbstoff ist.

3. Verfahren nach Anspruch 1 oder 2, dadurch gekennzeichnet, daß R für Wasserstoff, Methyl, Ethyl, Propyl, Isopropyl, Butyl, Isobutyl, sek.-Butyl, tert.-Butyl, Carboxymethyl, β-Carboxethyl, Methoxycarbonylmethyl, Ethoxycxarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl, Aminosulfonylmethyl und β-Sulfatoethyl, insbesondere Wasserstoff, Methyl oder Ethyl, bevorzugt Wasserstoff, steht.

4. Verfahren nach mindestens einem der Ansprüche 1 bis 3, dadurch gekennzeichnet, daß als Verbindungen der Formel (II) 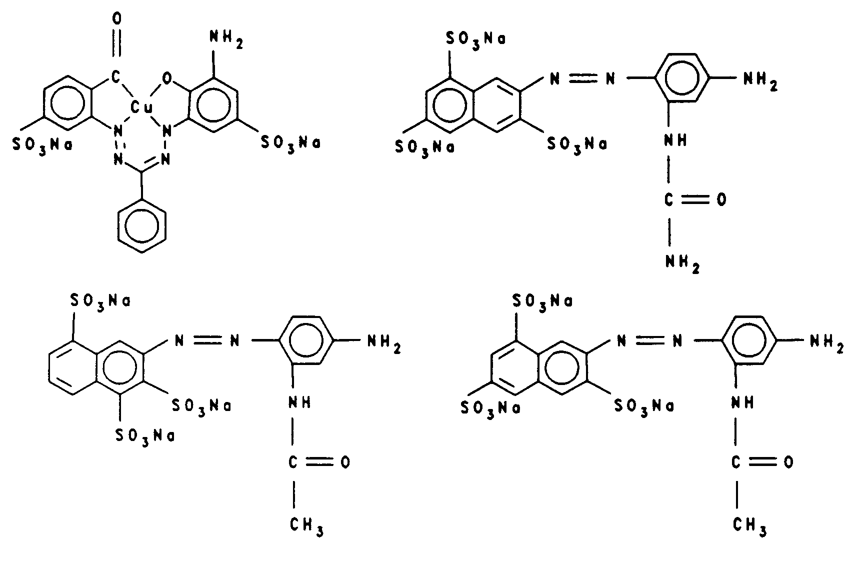 eingesetzt werden.

5. Verfahren nach mindestens einem der Ansprüche 1 bis 4, dadurch gekennzeichnet, daß als Puffer Phosphat, insbesondere Dinatriumhydrogenphosphat, Dilithiumhydrogenphosphat, Dikaliumhydrogenphosphat, insbesondere Dinatriumhydrogenphosphat eingesetzt werden.

6. Verfahren nach mindestens einem der Ansprüche 1 bis 5, dadurch gekennzeichnet, daß der Puffer in einer 1,0 bis 1,8, insbesondere 1,05 bis 1,5, bevorzugt 1,1 bis 1,3molaren Menge, bezogen auf die Farbstoffkomponente, eingesetzt wird.

7. Verfahren nach mindestens einem der Ansprüche 1 bis 6, dadurch gekennzeichnet, daß die Verweilzeit im Reaktorraum 1 bis 20, insbesondere 1 bis 15, bevorzugt 2 - 10 Sekunden beträgt.

8. Verwendung der nach dem Verfahren gemäß der Ansprüche 1 bis 7 erhaltenen Farbstoffe zur weiteren Umsetzung mit Verbindungen der Formel (III)
H-Z (III)
worin Z eine gegebenenfalls substituierte Aminogruppe bedeutet, zu Reaktivfarbstoffen der allgemeinen Formel (I) 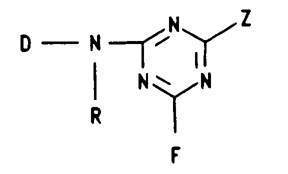 worin D, R und Z die erwähnte Bedeutung besitzen.
